# EUROPÄISCHE PATENTANMELDUNG

(11) **EP 4 439 299 A1**
(43) Veröffentlichungstag der Anmeldung: **02.10.2024**
(21) Anmeldenummer: 23166030.9
(22) Anmeldetag: 31.03.2023
(51) Int. Cl.: G06F 9/54, G06F 9/451, G06F 16/23

(54) **VERFAHREN UND VORRICHTUNG ZUR KOPPLUNG EINER SOFTWARE-APPLIKATION MIT EINEM DIENST, INSBESONDERE EINEM DATENBANK-DIENST**

(71) Anmelder: Siemens Aktiengesellschaft, 80333 München (DE)
(72) Erfinder: Farrell, Sean, 76133 Karlsruhe (DE)
(74) Vertreter: Siemens Patent Attorneys

(57) **Zusammenfassung**

Ein Verfahren zur Kopplung einer Software-Applikation (2) mit einem Dienst (5), insbesondere einem Datenbank-Dienst, wobei die Software-Applikation (2) mittels Anfragen (POST/X) auf Ressourcen des Dienstes (2) zugreift, wobei die Anfragen (POST/X) jeweils eine Aktivität in Bezug auf die Ressource definieren, umfasst erfindungsgemäß die folgenden Schritte:
- Empfangen einer ersten Anfrage (POST/X) an den Dienst (5), wobei die erste Anfrage (POST/X) eine erste Aktivität in Bezug auf eine Ressource des Dienstes definiert,
- Ermitteln einer zweiten Anfrage (POST/Y) an den Dienst (5), wobei die zweite Anfrage (POST/Y) eine zweite Aktivität definiert, die die erste Aktivität in Bezug auf die Ressource rückgängig macht,
- Speichern einer Information zu der zweiten Anfrage (POST/Y).
Hierdurch kann für eine Software-Applikation mit Versionierung und/oder Rückgängigmachungsfunktionen eine einfache Möglichkeit geschaffen werden, auf Ressourcen von Diensten zuzugreifen, die keine derartige Versionierung oder Rückgängigmachungsfunktionen in Bezug auf diese Ressourcen anbieten.

## Beschreibung

Die Erfindung betrifft ein Verfahren und eine Vorrichtung zur Kopplung einer Software-Applikation mit einem Dienst, insbesondere einem Datenbank-Dienst, gemäß Patentanspruch 1 bzw. 14. Die Erfindung betrifft ferner ein Computerprogramm und ein Computerprogrammprodukt gemäß Patentanspruch 17 bzw. 18.

Software-Applikationen, insbesondere cloud-basierte Software-Applikationen, integrieren in zunehmenden Maße externe Dienste, insbesondere externe web-basierte Datenbankdienste. Dies gilt insbesondere für cloud-basierte Software-Applikationen in Verbindung mit Automatisierungssystemen, wie z.B. zum Asset Management, zum Condition Monitoring, zu einer Betriebsanalyse, zum Engineering, zur Cybersecurity oder zu einer Simulation von Automatisierungsgeräten, Automatisierungssystemen bzw. der davon gesteuerten und/oder geregelten Einrichtungen, Maschinen oder industriellen Anlagen.

Automatisierungssysteme kommen beispielsweise im Bereich der Produktion, der Energieerzeugung und -verteilung, des Gebäudemanagements, der Logistik, der Antriebstechnik etc. zum Einsatz. Der eigentliche branchenspezifische Prozess, z.B. Produktions- oder Energieerzeugungsprozess, wird dabei durch das Automatisierungssystem gesteuert und/oder geregelt.

Bei einer industriellen Anlage kann es sich beispielsweise um eine Anlage der Prozessindustrie wie beispielsweise eine chemische, pharmazeutische oder petrochemische Anlage, eine Anlage aus der Nahrungs- und Genussmittelindustrie, eine Papierfabrik, ein Stahlwerk oder ein thermisches Kraftwerk handeln. Weiterhin sind umfasst auch jegliche Anlagen aus der diskreten oder hybriden Fertigungsindustrie (z.B. zur Herstellung von Fahrzeugen, Batterien oder Halbleitern). Auch andere Anlagen wie z.B. zur Steuerung einer kommunalen Trinkwasserversorgung oder Abwasserentsorgung oder Anlagen zur Energieerzeugung wie z.B. Windräder oder Solaranlagen sind von dem Begriff der industriellen Anlage umfasst.

Typische web-basierte Datenbankdienste sind Dokumentenmanagement-Systeme, die beispielsweise Dokumente (z.B. Datenblätter, Betriebshandbücher, Wartungsunterlagen), Zertifikate oder weitere Informationen (z.B. Herstellerinformationen zu HW- oder SW-Versionsständen, Bestellnummern, digitale Produktpässe) zu Automatisierungsgeräten oder Anlagenkomponenten zur Verfügung stellen. Es kann sich aber beispielsweise auch um Datenbanken mit Engineering-Unterlagen, Automatisierungs-Software oder digitalen Simulationsmodellen (Digital Twins) für Automatisierungsgeräte oder Anlagenkomponenten handeln.

Bei einem Automatisierungssystem bzw. einer davon gesteuerten/geregelten Anlage kann es im Lebenszyklus zu Änderungen kommen. Beispielsweise wird die Anlage bzw. das Automatisierungssystem vergrößert, verkleinert oder umgebaut. Automatisierungsgeräte werden durch andere ersetzt oder es werden darin neue Softwarestände mit neuen Funktionalitäten eingesetzt. Derartige Änderungen müssen auch in einer Software-Applikation mitgezogen werden, die mit dem Automatisierungssystem in Verbindung steht. Die Änderungen werden hierzu durch unterschiedliche Versionen der Software-Applikation dokumentiert. Insbesondere bei Automatisierungssystemen bzw. den zugrunde liegenden Automatisierungsprojekten und den damit in Verbindung stehenden Software-Applikationen bestehen deshalb strenge Anforderungen an das (Projekt-)Versionsmanagement. Es wird hierzu manchmal auch von einer strengen "Versionierung" bzw. "Projektversionierung" gesprochen.

Eine derartige Versionierung muss auch in Bezug auf Dienste möglich sein, auf die eine Software-Applikation zugreift.

Ein Zugriff auf einen Dienst erfolgt häufig über Anfragen, die eine Aktivität in Bezug auf eine Ressource des Dienstes definieren.

Für derartige Anfragen bzw. einen Zugriff auf Ressourcen derartiger Dienste wird beispielsweise das Hypertext Transfer Protocol (http) verwendet, vorzugsweise in Kombination mit der REST-Architektur (d.h. es kommt auf Seite des Dienstes ein REST-Application Programming Interface (REST-API) zum Einsatz).

Das http-Protokoll bietet dabei auch eine Möglichkeit, in den Nutzdaten (payload) einer Anfrage eine Information zu einer Version einer Ressource mitzusenden. Für den Fall, dass die Versionierungen auf Seite einer Software-Applikation, die eine http-Anfrage versendet, und auf Seite des Dienstes, der die Anfrage empfängt, unterschiedlich sind, ist in der US 2018/0288189 A1 bereits eine Lösung offenbart, bei der durch eine zwischen Sender und Empfänger geschaltete Vorrichtung eine Umsetzung einer von dem Sender erhaltenen Versionsnummer in eine Versionsnummer des Empfängers erfolgt.

Ausgehend hiervon ist es Aufgabe vorliegender Erfindung, weitere Möglichkeiten für eine Kopplung einer Software-Applikation mit einem Dienst bereitzustellen.

Die Lösung dieser Aufgabe gelingt durch ein Verfahren und eine Vorrichtung zur Kopplung einer Software-Applikation mit einem Dienst gemäß Patentanspruch 1 bzw. Patentanspruch 14. Ein Computerprogramm und ein Computerprogrammprodukt sind Gegenstand der Patentansprüche 17 bzw. 18. Vorteilhafte Ausgestaltungen sind jeweils Gegenstand der Unteransprüche.

Das erfindungsgemäße Verfahren zur Kopplung einer Software-Applikation mit einem Dienst, insbesondere einem Datenbank-Dienst, wobei die Software-Applikation mittels Anfragen auf Ressourcen des Dienstes zugreift, wobei die Anfragen jeweils eine Aktivität in Bezug auf die Ressource definieren, ist gekennzeichnet durch folgende Schritte:
- Empfangen einer ersten Anfrage an den Dienst, wobei die erste Anfrage eine erste Aktivität in Bezug auf eine Ressource des Dienstes definiert,
- Ermitteln einer zweiten Anfrage an den Dienst, wobei die zweite Anfrage eine zweite Aktivität definiert, die die erste Aktivität in Bezug auf die Ressource rückgängig macht,
- Speichern einer Information zu der zweiten Anfrage.

Die Erfindung geht dabei von der Erkenntnis aus, dass manche Dienste überhaupt keine Versionierung anbieten. Es ist nicht einmal möglich, Änderungen an Ressourcen des Dienstes rückgängig zu machen.

Wenn ein Dienst aber keine Möglichkeiten für eine Rückgängigmachung oder Versionierung anbietet, dann kann dieser Dienst entweder nicht genutzt werden, oder es müssen hierfür spezielle Funktionalitäten auf Seite der Software-Applikation implementiert werden. Dies ist in der Regel jedoch aufwendig in der Pflege, vor allem wenn mehrere Clients auf Seite der Software-Applikation mit jeweils unterschiedlichen Versionierungen auf den Dienst zugreifen.

Die Erfindung löst dieses Problem, in dem eine zweiten Anfrage an den Dienst ermittelt wird, die eine zweite Aktivität definiert, die die erste Aktivität in Bezug auf die Ressource rückgängig macht, und eine Information zu der zweiten Anfrage speichert. Die gespeicherte Information zu der zweiten Anfrage ermöglicht es, zu einem späteren Zeitpunkt die erste Aktivität wieder rückgängig zu machen. Mit Hilfe dieser einfachen Möglichkeit zur Rückgängigmachung von Aktivitäten ist es auch besonders einfach möglich, einen früheren Versionsstand des

Dienstes bzw. seiner Ressourcen wieder herzustellen. Es ist somit für eine Software-Applikation mit Versionierung und/oder Rückgängigmachungsfunktionen eine einfache Möglichkeit geschaffen, auf Ressourcen von Diensten zuzugreifen, die keine derartige Versionierung oder Rückgängigmachungsfunktionen in Bezug auf diese Ressourcen anbieten.

Das Verfahren ist dabei besonders einfach implementierbar, wenn der Dienst seine Ressourcen symmetrisch implementiert, d.h. wenn zu einer Aktivität in Bezug auf eine Ressource des Dienstes wiederum eine andere Aktivität definiert ist, die die erste Aktivität in Bezug auf die Ressource rückgängig macht. Dies ist beispielsweise bei der REST-Architektur auf Basis des http-Protokolls gemäß RFC 7321 § 4.3 der Fall. Hier stellt beispielsweise eine DELETE-Methode nach einer PUT-Methode den ursprünglichen Zustand wieder her, d.h. die DELETE-Methode macht die Aktivität der PUT-Methode in Bezug auf die Ressource wieder rückgängig.

Das Verfahren läuft besonders vorteilhaft in einer zwischen der Software-Applikation und dem Dienst geschalteten Kopplungsvorrichtung ab, d.h. einer Vorrichtung, die die Software-Applikation mit dem Dienst koppelt. Die Vorrichtung kann dabei im Sinne eines "Interceptors" die Anfragen der Software-Applikation abfangen und verarbeiten. Das Verfahren bzw. die Kopplungsvorrichtung, auf der das Verfahren abläuft, kann dann selbst wiederum als gesonderter "Dienst" von der Software-Applikation in Anspruch genommen werden.

Auf Seite der Software-Applikation sind dann keine Unterscheidungen nötig, ob auf einen Dienst mit oder ohne Rückgängigmachungsfunktionen oder Versionierung zugegriffen wird. Sobald der Dienst keine derartigen Funktionen anbietet, wird einfach das erfindungsgemäße Verfahren bzw. die Kopplungsvorrichtung zwischen die Software-Applikation und den Dienst geschaltet. Die Anfragen der Software-Applikation an die Dienste sind dann für alle Fälle gleich.

Die erste Anfrage kann anschließend an den Dienst gesendet werden, entweder durch ein Weiterleiten der ersten Anfrage, oder durch ein Neuerzeugen der ersten Anfrage. Dies erfolgt vorzugsweise zeitlich erst nach erfolgreicher Ermittlung der zweiten Anfrage und Speicherung der Information zu der zweiten Anfrage, damit bis zu diesem Zeitpunkt keine Änderung an den Ressourcen des Dienstes erfolgt.

Das Senden der ersten Anfrage an den Dienst erfolgt dann von Vorteil durch die Kopplungs-Vorrichtung bzw. den Interceptor, kann prinzipiell aber auch nach entsprechender Mitteilung an die Software-Applikation auch durch diese selbst erfolgen.

Wenn zu einem späteren Zeitpunkt ein Rückgängigmachen der ersten Aktivität gewünscht ist, dann kann basierend auf der gespeicherten Information zu der zweiten Anfrage die zweite Anfrage an den Dienst gesendet werden. Das Senden der zweiten Anfrage an den Dienst erfolgt dann von Vorteil durch die Kopplungs-Vorrichtung (bzw. den Interceptor), kann prinzipiell aber auch nach entsprechender Mitteilung an die Software-Applikation durch diese selbst erfolgen.

Gemäß einer vorteilhaften Ausgestaltung erfolgt das Senden der zweiten Anfrage nach einem Empfang einer Aufforderung der Software-Applikation nach einer Rückgängigmachung der ersten Aktivität in Bezug auf die Ressource.

Gemäß einer weiteren vorteilhaften Ausgestaltung hat die erste Anfrage eine Zuordnung zu einem internen Zustand der Software-Applikation, insbesondere zu einer Version der Software-Applikation. Hierdurch ist besonders einfach eine Synchronisation des Zustandes (z.B. Version) der Software-Applikation mit einem Zustand (z.B. Version) des Dienstes möglich.

Dies ist besonders einfach erzielbar, wenn die erste Anfrage eine Zustands-Information zu dem internen Zustand der Software-Applikation umfasst und die Zustands-Information ebenfalls gespeichert wird. Wenn der Dienst mehrere Clients mit jeweils eigener Versionierung umfasst, dann kann durch eine Protokollierung der Zustands-Informationen und deren Zuordnung zu einem der Clients an einer zentralen Stelle auch für jeden der Clients eine individuell angepasste Versions-Synchronisierung mit dem Dienst ermöglich werden.

Alternativ ist es aber auch möglich, dass jede Anfrage, die eine Ressource auf Seite des Dientes ändert oder löscht, mit einer Zustandsänderung (z.B. Versionsänderung) auf Seite der Software-Applikation einhergeht. Die Software-Applikation kann dann die Zahl derartiger Anfragen ermitteln und daraus eine Information über ihren Zustand (z.B. Version) ableiten. Auch auf Seite desjenigen, der derartige Anfragen empfängt, kann die Zahl derartiger Anfragen gezählt werden und hierdurch der Zustand (z.B. Version) der Software-Applikation abgeleitet, der ersten Anfrage zugeordnet und abgespeichert werden. Mit diesen Verfahrensschritten ist es nicht notwendig, eine Zustands-Information zu dem internen Zustand der Software-Applikation mit der ersten Anfrage zu übertragen.

Das Senden der zweiten Anfrage erfolgt dann vorzugsweise nach einem Empfang einer ersten Anfrage der Software-Applikation, die sich auf einen früheren Zustand der Software-Applikation, insbesondere eine frühere Version der Software-Applikation, bezieht.

Wenn in einer zeitlichen Reihenfolge hintereinander mehrere erste Anfragen empfangen werden, dann werden die zu diesen jeweils ermittelten zweiten Anfragen von Vorteil in umgekehrter zeitlicher Reihenfolge hintereinander an den Dienst gesendet. Hierdurch ist eine zeitlich korrekte Rückgängigmachung der jeweils zugeordneten ersten Aktivitäten möglich.

Dies kann besonders einfach dadurch implementiert werden, dass ein Zeitpunkt des Empfangs der ersten Anfrage ermittelt und gespeichert wird.

Im Fall, dass die erste Anfrage eine Änderung oder ein Löschen einer Ressource des Dienstes bewirkt, wird vorzugsweise eine Anfrage an den Dienst gesendet, die den Dienst zur Mitteilung des Inhalts der zu ändernden oder zu löschenden Ressource auffordert, wobei ein mit einer Antwort des Dienstes zu dieser Anfrage empfangener Inhalt gespeichert wird.

Gemäß einer besonders vorteilhaften Ausgestaltung wird für die Anfragen bzw. den Zugriff auf die Ressourcen des Dienstes das Hypertext Transfer Protocol (http) verwendet, vorzugsweise in Kombination mit der REST-Architektur.

Gemäß einer weiteren vorteilhaften Ausgestaltung wird das Verfahren für eine Rückgängigmachung von Änderungen oder Löschungen von Ressourcen des Dienstes und/oder für eine Versionierung in Bezug auf die Ressourcen des Dienstes verwendet.

Eine erfindungsgemäße Vorrichtung zur Kopplung einer Software-Applikation mit einem Dienst, insbesondere einem Datenbank-Dienst, wobei die Software-Applikation mittels Anfragen auf Ressourcen des Dienstes zugreift, wobei die Anfragen jeweils eine Aktivität in Bezug auf die Ressource definieren, umfasst eine Schnittstelle, eine Verarbeitungseinheit und einen Speicher, wobei die Schnittstelle ausgebildet ist zum
- Empfangen einer ersten Anfrage an den Dienst, wobei die erste Anfrage eine erste Aktivität in Bezug auf eine Ressource des Dienstes definiert,
   und wobei die Verarbeitungseinheit ausgebildet ist, zum
- Ermitteln einer zweiten Anfrage an den Dienst, wobei die zweite Anfrage eine zweite Aktivität definiert, die die erste Aktivität in Bezug auf die Ressource rückgängig macht,
- Speichern einer Information zu der zweiten Anfrage in dem Speicher.

Gemäß einer vorteilhaften Ausgestaltung ist die Schnittstelle auch ausgebildet zum Senden der ersten Anfrage an den Dienst.

Gemäß einer weiteren vorteilhaften Ausgestaltung ist die Verarbeitungseinheit ausgebildet, die zweite Anfrage zu erzeugen, wobei die zweite Anfrage auf der gespeicherten Information zu der zweiten Anfrage basiert, und die Schnittstelle ist ausgebildet zum Senden der zweiten Anfrage an den Dienst.

Die Vorteile des erfindungsgemäßen Verfahrens bzw. der erfindungsgemäßen Koppelvorrichtung kommen besonders zum Tragen, wenn die Software-Applikation, der Dienst und/oder die Kopplungsvorrichtung cloudbasiert sind. Bei dem Dienst handelt es sich von Vorteil um einen webbasierten Dienst.

Gemäß einer weiteren vorteilhaften Ausgestaltung steht die Software-Applikation in Verbindung mit einem Automatisierungssystem einer industriellen Anlage, insbesondere ist sie ein Bestandteil eines derartigen Automatisierungssystems.

Ein erfindungsgemäßes Computerprogramm umfasst Befehle, die bei der Ausführung des Programms durch einen Computer diesen veranlassen, das vorstehend beschriebene Verfahren auszuführen.

Ein erfindungsgemäßes computerlesbares Speichermedium umfasst Befehle, die bei der Ausführung durch einen Computer diesen veranlassen, das vorstehend beschriebene Verfahren auszuführen.

Die für das erfindungsgemäße Verfahren und seine vorteilhaften Ausgestaltungen genannten Wirkungen und Vorteile gelten entsprechend für das erfindungsgemäße System und seine vorteilhaften Ausgestaltungen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Dabei sind einander entsprechende Teile mit jeweils gleichen Bezugszeichen versehen. Es zeigen:
- FIG 1:: ein System umfassend eine Software-Applikation, mehrere Dienste und eine Kopplungsvorrichtung zur Kopplung der Software-Applikation mit einem der Dienste,
- FIG 2:: eine Detaildarstellung der Kopplungsvorrichtung von FIG 1,
- FIG 3:: einen erfindungsgemäßen Verfahrensablauf auf der Kopplungsvorrichtung von FIG 1 und 2 und
- FIG 4:: eine Veranschaulichung der Kommunikation der Kopplungsvorrichtung im Rahmen des Verfahrensablaufes von FIG 3.

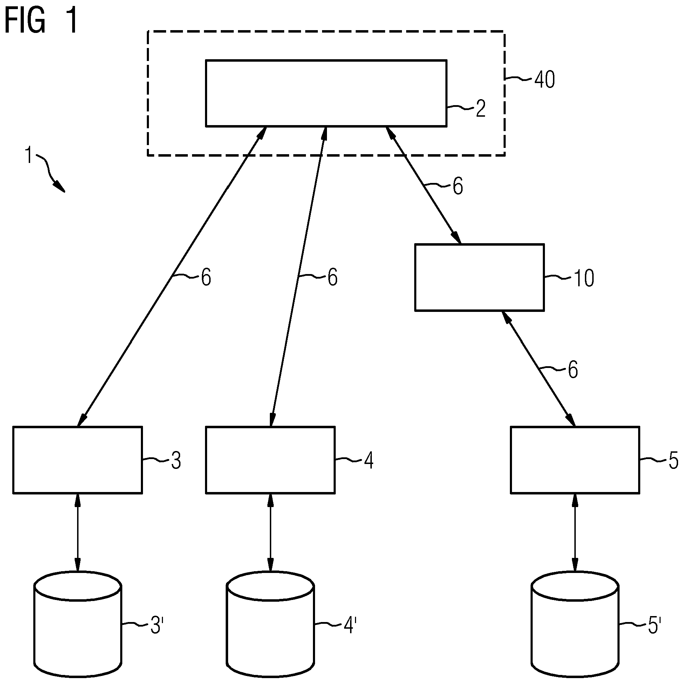

FIG 1 zeigt in vereinfachter Darstellung ein System 1 umfassend eine Software-Applikation 2 und mehrere webbasierte Dienste 3, 4, 5. Bei der Software-Applikation 2 handelt es sich beispielsweise um eine cloud-basierte Software-Applikation eines Automatisierungssystems 40 einer industriellen Anlage, z.B. eines Prozessleitsystems, die einem strengen Versionsmanagement unterliegt. Die Software-Applikation kann z.B. zum Asset Management, zum Condition Monitoring, zu einer Betriebsanalyse, zum Engineering, zur Cybersecurity oder zu einer Simulation von Automatisierungsgeräten oder des Automatisierungssystems bzw. einer davon gesteuerten und/oder geregelten industriellen Anlage dienen.

Bei den Diensten 3, 4, 5 handelt es sich um externe cloud-basierte Datenbank-Dienste wie beispielsweise Dokumentenmanagement-Systeme, die Dokumente für Automatisierungsgeräte des Prozessleitsystems zur Verfügung stellen. Jedem der Dienste 3, 4, 5 liegt deshalb eine Datenbank 3', 4*'* bzw. 5` zugrunde.

Die Software-Applikation 2 kommuniziert mit den Diensten 3, 4, 5 und greift auf Ressourcen der Datenbanken 3', 4', 5` unter Nutzung des http-Protokolls gemäß RFC 7321 in Verbindung mit der REST-Architektur (symbolisiert durch die Pfeile 6).

Die Dienste 3, 4 unterstützen dabei eine Versionierung und bieten verschiedene Funktionen zur Rückgängigmachung von Änderungen an den Ressourcen der Datenbanken 3', 4', wohingegen der Dienst 5 derartige Möglichkeiten nicht anbietet. Damit die Software-Applikation 2 mit sämtlichen Diensten 3, 4, 5 auf eine gleiche Art und Weise unter Nutzung von Funktionen zur Rückgängigmachung von Änderungen und zur Versionierung kommunizieren kann, ist in die Kommunikation zwischen der Software-Applikation 2 und dem Dienst 5 eine Kopplungsvorrichtung 10 zur Kopplung der Software-Applikation 2 mit Dienst 5 geschaltet. Diese agiert im Sinne eines sogenannten "Interceptors", der Anfragen der Software-Applikation 2 abfängt und verarbeitet, um Funktionen zur Rückgängigmachung von Änderungen und zur Versionierung in Bezug auf den Dienst 5 zu ermöglichen.

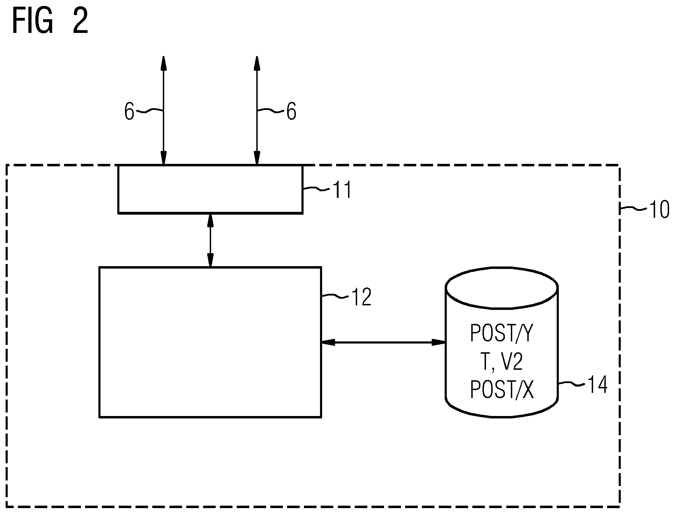

Gemäß einer in FIG 2 gezeigten Detaildarstellung der Kopplungsvorrichtung 10 von FIG 1 umfasst diese eine Schnittstelle 11, eine Verarbeitungseinheit 12 und einen Datenspeicher 14.

Die Schnittstelle 11 ist ausgebildet zum Empfangen von Anfragen der Software-Applikation 2 an den Dienst 5 und zum Senden von Anfragen an den Dienst 5. Die Schnittstelle 11 ist somit ausgebildet sowohl zur Kommunikation mit der Software-Applikation 2 als auch mit dem Dienst 5, was durch die beiden mit dem Bezugszeichen 6 versehenen Pfeile symbolisiert wird. Es ist aber auch möglich, dass die Schnittstelle 11 wiederum zwei gesonderte Schnittstellen umfasst, von denen eine zur Kommunikation mit der Software-Applikation 2 und die andere zur Kommunikation mit dem Dienst 5 dient.

Insbesondere ist die Schnittstelle 11 ausgebildet zum Empfangen einer ersten Anfrage an den Dienst 5, wobei die erste Anfrage eine erste Aktivität in Bezug auf eine Ressource des Dienstes 5 definiert, und zu einem nachfolgenden Senden der ersten Anfrage an den Dienst 5.

Die Verarbeitungseinheit 12 ist ausgebildet zum Ermitteln einer zweiten Anfrage an den Dienst 5, wobei die zweite Anfrage eine zweite Aktivität definiert, die die erste Aktivität in Bezug auf die Ressource des Dienstes 5 bzw. der Datenbank 5*'* rückgängig macht.

Der Datenspeicher 14 dient zum Speichern einer Information zu der zweiten Anfrage.

Die Verarbeitungseinheit 12 ist weiterhin ausgebildet, die zweite Anfrage zu erzeugen, wobei die zweite Anfrage auf der gespeicherten Information zu der zweiten Anfrage basiert, und die Schnittstelle 11 ist ausgebildet zum Senden der zweiten Anfrage an den Dienst 5.

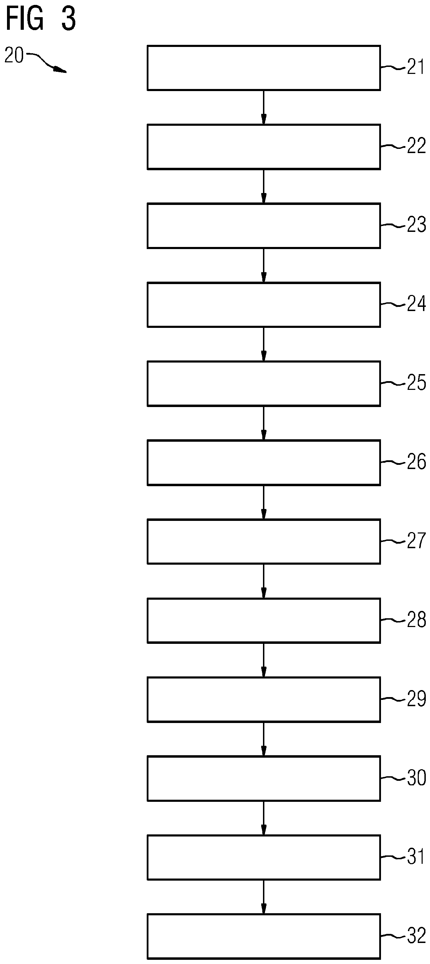

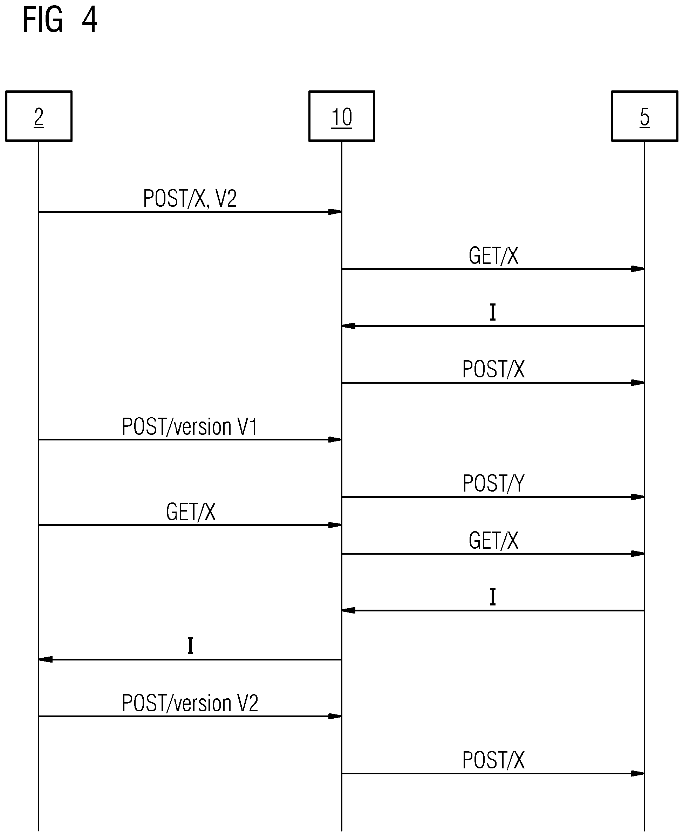

Weitere Einzelheiten der Funktionsweise der Kopplungsvorrichtung 10 werden nun zusätzlich in Verbindung mit FIG 3 und 4 erläutert.

FIG 3 zeigt in Zusammenschau mit FIG 4 einen erfindungsgemäßen Verfahrensablauf 20 auf der Kopplungsvorrichtung 10 von FIG 1 und 2. Es wird dabei als Ausgangspunkt angenommen, dass der Dienst 5 bzw. die Datenbank 5*'* einen Stand hat, der einer Version mit einer Versionsbezeichnung *"*V1*"* der Software-Applikation 2 entspricht.

In einem ersten Schritt 21 empfängt die Kopplungsvorrichtung 10 über die Schnittstelle 11 von der Software-Applikation 2 eine erste Anfrage nach einer Aktivität bezüglich einer Ressource der Datenbank 5`. Im Fall von REST/http zum Beispiel eine Anfrage der Methode POST/sensors/2 {name: "SITRANS2", temp: 80}, in FIG 4 abgekürzt mit POST/X. Die Anfrage bedeutet, dass in der Datenbank 5` bei der Ressource mit der URI für "sensors/2" der Inhalt geändert werden soll, hier ein Name eines Sensors auf "SITRANS2" und ein Wert für eine maximal erlaubte Umgebungstemperatur temp des Sensors auf "80" (d.h. 80°C) geändert werden soll.

Die Kopplungsvorrichtung 10 empfängt dabei von der Software-Applikation 2 über die Schnittstelle 11 in den Nutzdaten (Payload) der Anfrage POST/X, oder als separate Nachricht, auch eine Information zu einer neueren Version der Software-Applikation 2, hier eine Versionsbezeichnung "V2".

In einem zweiten Schritt 22 ermittelt die Kopplungsvorrichtung 10 bzw. deren Verarbeitungseinheit 12 einen Zeitpunkt T des Empfangs der Anfrage POST/X.

In einem dritten Schritt 23 ermittelt die Verarbeitungseinheit 12 eine zweite Anfrage an den Dienst 5, wobei die zweite Anfrage eine zweite Aktivität definiert, die die erste Aktivität in Bezug auf die Ressource rückgängig macht. Im vorgenannten ist dies beispielsweise ebenfalls eine Anfrage der Methode POST, wobei allerdings zu berücksichtigen ist, dass durch diese Anfrage in der Datenbank 5*'* unter der URI für "sensors/2" der Eintrag in den aktuell bestehenden Eintrag geändert werden müsste.

In solch einem Fall, bei dem die erste Aktivität eine Änderung des Inhalts einer Ressource oder ein Löschen der Ressource bewirkt, erzeugt und sendet die Verarbeitungseinheit 12 eine Anfrage GET/sensors/2 (in FIG 4 abgekürzt mit GET/X) an den Dienst 5, die den Dienst 5 zur Mitteilung des Inhalts I der Ressource unter der genannten URI auffordert. Von dem Dienst 5 wird daraufhin über die Schnittstelle 11 eine Antwort mit dem Inhalt I der Ressource empfangen, hier beispielsweise der Name "SITRANS1" und ein Wert "70" für eine maximal erlaubte Umgebungstemperatur temp von 70°C.

In einem vierten Schritt 24 speichert die Verarbeitungseinheit 12 in dem Speicher 14 eine Information über die zweite Anfrage, hier POST/sensors/2 {name: "SITRANS1", temp:70} (in FIG 2 und FIG 4 abgekürzt mit POST/Y), über die zugeordnete erste Anfrage POST/X, den Zeitpunkt T des Erhalts der zugeordneten ersten Anfrage POST/X und die der ersten Anfrage zugeordnete Versionsbezeichnung V2 der Software-Applikation 2.

In einem fünften Schritt 25 sendet die Kopplungsvorrichtung 10 auf Veranlassung der Verarbeitungseinheit 12 die erste Anfrage POST/X über die Schnittstelle 11 an den Dienst 5.

In einem sechsten Schritt 26 empfängt die Kopplungsvorrichtung 10 über die Schnittstelle 11 von der Software-Applikation 2 eine Anfrage POST/version V1, die den Dienst 5 zu einer Rückkehr zur Version V1 auffordert.

Die Verarbeitungseinheit 12 liest nun in einem siebten Schritt 27 aus dem Speicher 14 die der zweiten Version V2 zugeordnete Information zu der zweite Anfrage POST/Y zur Rückgängigmachung der Änderung des Inhalts der Ressource von der Version V2 zur Version V1 aus, erzeugt die Anfrage POST/Y und sendet diese über die Schnittstelle 11 an den Dienst 5. Damit wird in der Datenbank 5*'* die Ressource unter der genannten URI wieder auf den Stand der Version V1 gebracht.

In einem achten Schritt 28 empfängt die Kopplungsvorrichtung 10 über die Schnittstelle 11 von der Software-Applikation 2 beispielsweise eine Anfrage GET/sensors/2 (in FIG 4 abgekürzt mit GET/X), die den Dienst 5 zur Mitteilung des Inhalts der Ressource der Datenbank 5*'* unter der genannten URI auffordert.

Daraufhin sendet die Kopplungsvorrichtung 10 in einem neunten Schritt 29 über die Schnittstelle 11 an den Dienst 5 die Anfrage GET/X, die den Dienst 5 zur Mitteilung des Inhalts I der Ressource unter der genannten URI auffordert.

In einem zehnten Schritt 30 empfängt die Kopplungsvorrichtung 10 über die Schnittstelle 11 eine Antwort I des Dienstes 5, in der der Inhalt I der Ressource (hier name: "SITRANS1", temp: 70) mitgeteilt wird, und leitet sie über die Schnittstelle 11 an die Software-Applikation 2 weiter.

In einem elften Schritt 31 empfängt die Kopplungsvorrichtung 10 über die Schnittstelle 11 von der Software-Applikation 2 eine Anfrage POST/version V2, die den Dienst 5 zu einer Rücckehr zur Version V2 auffordert.

Die Verarbeitungseinheit 12 ermittelt nun anhand der abgespeicherten Versionsbezeichnung V2 nun in einem zwölften Schritt 32 aus dem Speicher 14 die Information zu der ersten Anfrage POST/X zur Rückgängigmachung der Änderung des Inhalts der Ressource von der Version V1 zur Version V2, erzeugt die Anfrage POST/X und sendet diese über die Schnittstelle 11 an den Dienst 5. Damit wird in der Datenbank 5*'* die Ressource unter der genannten URI wieder auf den Stand der Version V2 gebracht.

Auf ähnliche Art und Weise kann im Fall eines Empfangs einer ersten Anfrage der Methode PUT (d.h. Anlegen einer neuen Ressource) die Methode DELETE (d.h. Löschen einer Ressource) als zweite Anfrage genutzt werden, um die Aktivität der Methode PUT in Bezug auf die Ressource rückgängig zu machen. Umgekehrt kann eine erste Anfrage der Methode DELETE durch eine zweite Anfrage der Methode PUT rückgängig gemacht werden.

Bei dem bisher erläuterten Verfahrensablauf wurde von der Software-Applikation 2 zusammen mit einer POST-Anfrage eine Information zu der Version (hier V2) an die Kopplungsvorrichtung 10 mitgegeben. Alternativ ist es aber auch möglich, dass jede Anfrage, die eine Ressource auf Seite des Dienstes 5 ändert oder löscht (hier z.B. die erste Anfrage POST/X), mit einer Zustandsänderung (z.B. Versionsänderung) auf Seite der Software-Applikation 2 einhergeht. Die Software-Applikation 2 kann dann die Zahl derartiger Anfragen ermitteln und daraus eine Information über ihren aktuellen Versionsstand ableiten. Auch auf Seite der Kopplungsvorrichtung 10, die derartige Anfragen empfängt, kann die Zahl dieser Anfragen gezählt, hierdurch die Version der Software-Applikation 2 abgeleitet und einer Anfrage, die eine Ressource auf Seite des Dienstes 5 ändert oder löscht (hier z.B. der ersten Anfrage POST/X) zugeordnet und abgespeichert werden. Auf diesem Wege ist es nicht notwendig, eine Versions-Information der Software-Applikation 2 an die Kopplungsvorrichtung 10 zu übertragen. Wenn von der Kopplungsvorrichtung 10 in einer zeitlichen Reihenfolge hintereinander mehrere erste Anfragen der Software-Applikation 2 über die Schnittstelle 11 in Bezug auf eine jeweils gleiche Version, hier z.B. die Version V2, empfangen werden, dann werden für diese Anfragen die Schritte 21 bis 25 jeweils separat durchlaufen.

Wenn dann in dem sechsten Schritt 26 die Kopplungsvorrichtung 10 über die Schnittstelle 11 die Anfrage GET/X (d.h. GET/sensors/2) der Software-Applikation 2 empfängt, die den Dienst 5 zur Mitteilung des Inhalts der Ressource der Datenbank 5` unter der genannten URI auffordert, allerdings in Bezug auf die vorherige Version V1 der Software-Applikation 2, dann werden sämtliche zu diesen jeweils ermittelten und in dem Speicher 14 abgespeicherten zweiten Anfragen von der Kopplungsvorrichtung über die Schnittstelle 11 hintereinander in umgekehrter zeitlicher Reihenfolge an den Dienst 5 gesendet. Hierdurch ist eine zeitlich korrekte Rückgängigmachung der jeweils zugeordneten ersten Anfragen von der Version V2 hin zur Version V1 möglich.

Im Folgenden wird tabellarisch noch ein beispielhafter Ablauf gezeigt, wenn über der Zeit Anfragen zu mehreren zeitlich hintereinander liegenden Versionen der Software-Applikation verarbeitet werden müssen:

| **Ve rs io n** | **An der Kopplungs-vorrichtung 20 empfangene erste Anfragen** | **Am Dienst 5 empfangene Anfrage** | **Zweite Anfrage zur Rückgängigmachung** |
|---|---|---|---|
| V1 | PUT /sensors {name: "SITRANS1", temp: 70} | PUT /sensors {name: "SITRANS1", temp: 70} | DELETE /sensors/1 |
| V2 | PUT /sensors {name: "SITRANS2", temp: 80} | PUT /sensors {name: "SITRANS2", temp: 80} | DELETE /sensors/2 |
| V3 | POST /sensors/2 {name: "SITRANS3"} | GET /sensors/2 POST /sensors/2 {name: "SITRANS3"} | POST /sensors/2 {name: "SITRANS2", temp: 80} |
| V4 | DELETE /sensors/1 | GET /sensors/1 DELETE /sensors/1 | PUT /sensors {name: "SITRANS1", temp: 70} |

Um von der Version V4 auf die Version V2 zurückzugehen, sind folgende Anfragen bzw. Aktivitäten bezüglich der Ressourcen der Datenbank 5` notwendig:

| Version | Rückgängigmachungs-Anfrage |
|---|---|
| V4 | PUT /sensors {name: "SITRANS1", temp: 70} |
| V3 | POST /sensors/2 {name: "SITRANS2", temp: 80} |

Durch die Verwendung des erfindungsgemäßen Verfahrens bzw. der erfindungsgemäßen Vorrichtung sind auf Seite der Software-Applikation 2 keine Unterscheidungen nötig, ob auf einen der Dienste 3, 4 mit Versionierung oder auf den Dienst 5 ohne Versionierung zugegriffen wird. Wenn ein Dienst, wie hier der Dienst 5, keine derartige Versionierung anbietet, wird einfach das erfindungsgemäße Verfahren bzw. die Kopplungsvorrichtung 10 zwischen die Software-Applikation und den Dienst geschaltet. Die Anfragen der Software-Applikation an die Dienste sind dann für alle Fälle gleich.

## Patentansprüche

1. Verfahren zur Kopplung einer Software-Applikation (2) mit einem Dienst (5), insbesondere einem Datenbank-Dienst, wobei die Software-Applikation (2) mittels Anfragen (POST/X) auf Ressourcen des Dienstes (2) zugreift, wobei die Anfragen (POST/X) jeweils eine Aktivität in Bezug auf die Ressource definieren,
**gekennzeichnet durch** folgende Schritte:
- Empfangen einer ersten Anfrage (POST/X) an den Dienst (5), wobei die erste Anfrage (POST/X) eine erste Aktivität in Bezug auf eine Ressource des Dienstes definiert,
- Ermitteln einer zweiten Anfrage (POST/Y) an den Dienst (5), wobei die zweite Anfrage (POST/Y) eine zweite Aktivität definiert, die die erste Aktivität in Bezug auf die Ressource rückgängig macht,
- Speichern einer Information zu der zweiten Anfrage (POST/Y).

2. Verfahren nach Anspruch 1, mit dem weiteren Schritt:
- Senden der ersten Anfrage (POST/X) an den Dienst (5).

3. Verfahren nach einem der vorhergehenden Ansprüche, mit dem weiteren Schritt:
- Senden der zweiten Anfrage (POST/Y) an den Dienst (5), wobei die zweite Anfrage (POST/Y) auf der gespeicherten Information zu der zweiten Anfrage basiert.

4. Verfahren nach Anspruch 3, wobei das Senden der zweiten Anfrage nach einem Empfang einer Aufforderung der Software-Applikation (2) zu einer Rückgängigmachung der ersten Aktivität in Bezug auf die Ressource erfolgt.

5. Verfahren nach einem der vorhergehenden Ansprüche, wobei die erste Anfrage (POST/X) eine Zuordnung zu einem internen Zustand der Software-Applikation (2), insbesondere zu einer Version (V1, V2) der Software-Applikation (2), hat.

6. Verfahren nach Anspruch 5, wobei das Senden der zweiten Anfrage (POST/Y) nach einem Empfang einer ersten Anfrage der Software-Applikation (2) erfolgt, die sich auf einen früheren Zustand der Software-Applikation (2), insbesondere eine frühere Version (V1, V2) der Software-Applikation (2), bezieht.

7. Verfahren nach einem der vorhergehenden Ansprüche, wobei in einer zeitlichen Reihenfolge hintereinander mehrere erste Anfragen (POST/X) empfangen werden, wobei die zu diesen jeweils ermittelten zweiten Anfragen (POST/Y) in umgekehrter zeitlicher Reihenfolge hintereinander an den Dienst (5) gesendet werden.

8. Verfahren nach einem der vorhergehenden Ansprüche, wobei ein Zeitpunkt (T) eines Empfangs der ersten Anfrage (POST/X) ermittelt und gespeichert wird.

9. Verfahren nach einem der vorhergehenden Ansprüche, wobei im Fall, dass die erste Anfrage (POST/X) eine Änderung oder ein Löschen einer Ressource des Dienstes (5) bewirkt, eine Anfrage (GET/X) an den Dienst (5) gesendet wird, die den Dienst (5) zur Mitteilung des Inhalts der zu ändernden oder zu löschenden Ressource auffordert, und wobei ein mit einer Antwort des Dienstes (5) zu dieser Anfrage empfangener Inhalt (I) gespeichert wird.

10. Verfahren nach einem der vorhergehenden Ansprüche, wobei es für die Anfragen das Hypertext Transfer Protocol (http) verwendet, vorzugsweise in Kombination mit der REST-Architektur.

11. Verfahren nach einem der vorhergehenden Ansprüche, wobei es für eine Rückgängigmachung von Änderungen oder Löschungen von Ressourcen des Dienstes (5) und/oder für eine Versionierung in Bezug auf die Ressourcen des Dienstes (5) verwendet wird.

12. Verfahren nach einem der vorhergehenden Ansprüche, wobei es in einer zwischen einer Software-Applikation und dem Dienst (5) geschalteten Kopplungsvorrichtung (10) abläuft.

13. Verfahren nach einem der vorhergehenden Ansprüche, wobei die Software-Applikation (2) in Verbindung mit einem Automatisierungssystem (40) einer industriellen Anlage steht, insbesondere ein Bestandteil eines derartigen Automatisierungssystems (40) ist.

14. Vorrichtung (10) zur Kopplung einer Software-Applikation (2) mit einem Dienst (5), insbesondere einem Datenbank-Dienst, wobei die Software-Applikation (2) mittels Anfragen auf Ressourcen des Dienstes zugreift, wobei die Anfragen jeweils eine Aktivität in Bezug auf die Ressource definieren, umfassend eine Schnittstelle (11), eine Verarbeitungseinheit (12) und einen Speicher (14),
wobei die Schnittstelle (11) ausgebildet ist zum
- Empfangen einer ersten Anfrage (POST/X) an den Dienst (5), wobei die erste Anfrage (POST/X) eine erste Aktivität in Bezug auf eine Ressource des Dienstes (5) definiert, und wobei die Verarbeitungseinheit (12) ausgebildet ist zum
- Ermitteln einer zweiten Anfrage (POST/Y) an den Dienst (5), wobei die zweite Anfrage (POST/Y) eine zweite Aktivität definiert, die die erste Aktivität in Bezug auf die Res source rückgängig macht,
- Speichern einer Information zu der zweiten Anfrage (POST/Y) in dem Speicher (14).

15. Vorrichtung (10) nach Anspruch 14, wobei die Schnittstelle (11) ausgebildet ist zum Senden der ersten Anfrage an den Dienst (5).

16. Vorrichtung (10) nach Anspruch 14 oder 15, wobei die Verarbeitungseinheit (12) ausgebildet ist, die zweite Anfrage (POST/Y) zu erzeugen, wobei die zweite Anfrage (POST/Y) auf der gespeicherten Information zu der zweiten Anfrage basiert, und wobei die Schnittstelle (11) ausgebildet ist zum Senden der zweiten Anfrage (POST/Y) an den Dienst (5).

17. Computerprogramm, umfassend Befehle, die bei der Ausführung des Programms durch einen Computer diesen veranlassen, das Verfahren nach einem der Ansprüche 1 bis 13 auszuführen.

18. Computerlesbares Speichermedium, umfassend Befehle, die bei der Ausführung durch einen Computer diesen veranlassen, das Verfahren nach einem der Ansprüche 1 bis 13 auszuführen.
